(19) Europäisches Patentamt / European Patent Office / Office européen des brevets

(11) **EP 2 237 913 B1**

(12) **EUROPÄISCHE PATENTSCHRIFT**

(45) Veröffentlichungstag und Bekanntmachung des Hinweises auf die Patenterteilung:
**23.10.2013 Patentblatt 2013/43**

(21) Anmeldenummer: **09702023.4**

(22) Anmeldetag: **14.01.2009**

(51) Int Cl.:
**B23B 51/02** (2006.01)

(86) Internationale Anmeldenummer:
**PCT/EP2009/000170**

(87) Internationale Veröffentlichungsnummer:
**WO 2009/090042 (23.07.2009 Gazette 2009/30)**

(54) **BOHRWERKZEUG MIT AUSSPITZUNG**

DRILLING TOOL HAVING POINT THINNING

OUTIL DE PERÇAGE ET POINTE CORRESPONDANTE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **15.01.2008 DE 102008004564**

(43) Veröffentlichungstag der Anmeldung:
**13.10.2010 Patentblatt 2010/41**

(73) Patentinhaber: **EMUGE-Werk Richard Glimpel GmbH & Co.KG Fabrik für Präzisionswerkzeuge**
**91207 Lauf a.d. Pegnitz (DE)**

(72) Erfinder:
• **GLIMPEL, Helmut**
 **91207 Lauf a.d. Pegnitz (DE)**
• **BORSCHERT, Bernhard**
 **96050 Bamberg (DE)**

(74) Vertreter: **Schröer, Gernot H.**
**Meissner, Bolte & Partner GbR**
**Bankgasse 3**
**90402 Nürnberg (DE)**

(56) Entgegenhaltungen:
**EP-A- 0 320 881          WO-A-99/50014**
**DE-A1-102006 018 322**

**Beschreibung**

Die Erfindung betrifft ein Bohrwerkzeug.

Es sind Bohrwerkzeug bekannt, die um eine Werkzeugachse drehbar sind und an ihrer Stirnseite zwei oder drei Hauptschneiden aufweisen, die nach innen in eine Querschneide übergehen. Die Querschneide verläuft in einem Zentralbereich oder Kernbereich des Bohrwerkzeugs an dessen Stirnseite. Entgegen ihrer Bezeichnung hat die Querschneide eines Bohrwerkzeugs zumeist primär nicht eine schneidende, sondern eine schabende Wirkung. Sie steht meist quer zur Bohr- bzw. Vorschubrichtung und erhöht den erforderlichen Arbeitsdruck. Die Vorschubkraft für die Querschneide kann etwa 1/3 der gesamten Vorschubkraft für das Bohrwerkzeug betragen. Zudem besteht die Gefahr des so genannten "verlaufens", d.h. einer seitlichen Lageverschiebung beim Anbohren. Die Eigenzentrierfähigkeit derartiger Bohrwerkzeuge ist daher nicht besonders gut.

Um diese Nachteile zu verringern, werden Bohrwerkzeuge, insbesondere Bohrwerkzeuge mit geraden Hauptschneiden, zur Verkürzung der Querschneide häufig mit einer sogenannten Ausspitzung, insbesondere mit einer Kreuzausspitzung oder einer sogenannten S-Ausspitzung, versehen. Nachteilig bei diesen Ausspitzungsformen ist jedoch, dass die Eigenzentrierfähigkeit solcher Bohrwerkzeuge nicht gut ist. Die Ursache dafür ist, dass der Winkel zwischen der ausgespitzten Querschneide, die auch als Restquerschneide bezeichnet wird, und dem Quetschneidenteil über dem Zentralbereich seht stumpf ist. Üblicherweise liegt dieser Winkel in einem Bereich von 130° bis 160°.

Daher wurde bereits versucht, den Restquerschneiden-Winkel, also den Winkel zwischen der Restquerschneide und einer geraden Verbindungslinie der Außenenden der Hauptschneiden, den sogenannten Schneidecke, von üblichen 55° auf etwa 70° zu vergrößern. Dies hat jedoch den Nachteil, dass der Freiwinkel zwischen Bohrwerkzeug und bearbeiteter Fläche im Zentralbereich erheblich kleiner wird und das Bohrwerkzeug im Zentralbereich nicht mehr frei geht.

Eine andere Möglichkeit zur Verbesserung der Eigenzentrierfähigkeit ist es, den Querschneidenwinkel, also den Winkel zwischen der nicht ausgespitzten Querschneide und der Verbindungslinie der Schneidecken, auf beispielsweise 10° zu verringern. Dies ist jedoch nur bei Bohrwerkzeuge mit konkav gebogener Hauptschneide möglich. Bei Bohrern mit gerader oder konvex gebogener Hauptschneide würde durch die Zerkleinerung dieses Querschneidenwinkels die Ausspitzung bis in den Bereich der Hauptschneide gezogen werden. Dies hätte zum Nachteil, dass dann der Spanwinkel in diesem Bereich zu klein wird.

In der Patentschtift DE 83 531 sowie in der Zusatz- Patentschrift 84 413 wurde ein zylindrischer Bohrer mit gerader oder schraubenförmig gewundenet Längsnut vorgeschlagen, der auf den den Schneidkanten zugekehrten Flächen scharfkantige Längsrippen trägt.

DE 199 83 068 T1 betrifft einen Bohrkopf mit einer konkaven Querschneide, die mit sekundären Schneidkanten der beiden Fasen über axial äußerste Extremitäten derselben verschmilzt, die von der Achse beabstandet sind.

Die DE 10 2006 018 322 offenbart ein Verfahren zum Einbringen eines Tiefloches in ein zu bearbeitendes Material, wobei zunächst mit Hilfe eines Pilotbohrers mit einem Schaft und einem Kopfabschnitt, wobei der Kopfabschnitt an seiner Stirnfläche eine kegelförmige Hanptschneide und zwei spiralförmig an der Außenseite des Kopfabschnittes verlaufende Spannuten aufweist, eine rotationssymmetrische Ausnehmung in das zu bearbeitende Material eingebracht wird und anschließend mit Hilfe eines Tieflochbohrers das einzubringende Tiefloch in den Grund der rotationssymmetrischen Ausnehmung gebohrt wird, wobei der Pilotbohrer einen Spitzenwinkel aufweist, der größer als der Spitzenwinkel des Tieflochbohrers ist. Der Oberbegriff von Anspruch 1 basiert auf diesem Dokument.

EP 0 320 881 offenbart einen Drehbohrer mit einem zylindrischen Körper, der eine Rotationsachse aufweist und der eine Stirnseite hat, die mit einem Werkstück in Kontakt steht, wobei der genannte Körper eine Spiralnut hat, die entlang einer äußeren Oberfläche ausgebildet ist, sodass sie sich spiralförmig entlang der Länge erstreckt zur genannten Stirnseite und eine Fase, die angrenzend an die genannte Nut angeordnet ist. Die genannte Nut weist eine erste Wandung auf, die in der Rotationsrichtung des genannten Körpers zeigt und eine zweite Wandung, die sich von einem inneren Ende zur ersten Wandung der Außenoberfläche dieses Körpers erstreckt.

WO 99/50014 beschreibt einen Bohrkopf mit einem zylindrischen Körper mit einer Längsachse, die sich bis zu einer Stirnseite erstreckt, wobei der genannte Bohrkopf zumindest zwei Spannuten aufweist und zumindest zwei Stege dazwischen. Jede Nut weist eine erste Seitenwand auf, die in die Rotationsrichtung des Bohrkopfes zeigt und eine zweite Seitenwand, die sich nach außen von der ersten Seitenwand erstreckt und mit dieser verschmilzt.

Aufgabe der Erfindung ist es nun, ein Bohrwerkzeug, insbesondere mit Kreuzausspitzung oder S-Ausspitzung, zu schaffen, der ein verbessertes Eigenzentrierverhalten aufweist, und dabei die vorgenannten Nachteile zumindest teilweise zu vermeiden.

Diese Aufgabe wird durch ein Bohrwerkzeug gemäß Anspruch 1 sowie weitere Ausführungsformen der Erfindung gelöst. Vorteilhafte Weiterbildungen ergeben sich aus den von Anspruch 1 sowie den weiteren Ausführungsformen der Erfindung jeweils abhängigen Ansprüchen.

Gemäß Anspruch 1 betrifft die Erfindung ein Bohrwerkzeug, das um ein zentrale Werkzeugachse drehbar ist, das wenigstens zwei an einer Stirnseite angeordnete Hauptschneiden aufweist, die in Richtung nach innen zur Werkzeugachse   in wenigstens eine Querschneide übergehen, wobei die Querschneide in einem oder über einen die Werkzeugachse umgebenden Zentralbereich an der Stirnseite verläuft, wobei die Querschneide im durch die oder im Bereich der Werkzeugachse verlaufenden innersten Bereich und/oder innenseitig an einen Ausspitzungsbereich anschließend eine Restquerschneide ausbildet, wobei an den außenliegenden Enden der Hauptschneiden Schneidenecken ausgebildet sind, wobei eine gerade Verbindungslinie definiert ist, die durch zwei Schneidenecken einander bezüglich der Werkzeugachse gegenüberliegender Hauptschneiden oder, bei Fehlen einer gegenüberliegenden Hauptschneide, durch eine Schneidecke und die Werkzeugachse verläuft,

wobei der Querschneiden-Innenbereich vom äußeren Ende der Restquerschneide weg innerhalb eines Bereichs mit einem Winkel zwischen -15° und +15° in Bezug auf eine Parallele zur Verbindungslinie verläuft und eine Länge von 1/100 bis 1/10 des Bohrerdurchmessers, vorzugsweise bis zur Fußseite des Bereichs, aufweist. Ein Winkelbereich zwischen -15° und +15° in Bezug auf eine Parallele zur Verbindungslinie ist einerseits eine gute Möglichkeit, die Eigenzentrierfähigkeit zu verbessern, andererseits weist aber das Bohrwerkzeug im Bereich der Querschneide eine hinreichend hohe Stabilität auf. Eine Länge von 1/100 bis 1/10 des Bohrerdurchmessers ermöglicht in der Regel ebenfalls eine verbesserte Eigenzentrierfähigkeit, wobei zugleich der Rollradius der beim Bohren anfallenden Späne nicht zu groß ist.

Gemäß einer weiteren Ausbildungsform der Erfindung ist das Bohrwerkzeug, um eine zentrale Werkzeugachse drehbar, wobei es wenigstens zwei an einer Stirnseite angeordnete Hauptschneiden aufweist, die in Richtung nach innen zur Werkzeugachse in wenigstens eine Querschneide übergehen, wobei die Querschneide in einem oder über einen die Werkzeugachse umgebenden Zentralbereich an der Stirnseite verläuft, wobei die Querschneide im durch die oder im Bereich der Werkzeugachse verlaufenden innersten Bereich und/oder innenseitig an einen Ausspitzungsbereich anschließend eine Restquerschneide ausbildet, wobei an den außenliegenden Enden der Hauptschneiden Schneidenecken ausgebildet sind, wobei eine gerade Verbindungslinie definiert ist, die durch zwei Schneidenecken einander bezüglich der Werkzeugachse gegenüberliegender Hauptschneiden oder, bei Fehlen einer gegenüberliegenden Hauptschneide, durch eine Schneidecke und die Werkzeugachse verläuft,

wobei die Querschneide, insbesondere der Querschneiden-Innenbereich, innerhalb eines Bereichs verläuft und/oder sich erstreckt,

a) wobei sich der Bereich von einer Spitze am Beginn des Querschneiden-Innenbereichs am äußeren Ende der Restquerschneide entlang einer parallel zur Verbindungslinie verlaufenden Symmetrielinie, vorzugsweise über eine Länge von 1/100 bis 1/10 des Bohrerdurchmessers, insbesondere bis quer zum Ende des Querschneiden-Innenbereichs am inneren Krümmungsbereich, und/ oder bis zu einer Fußseite erstreckt,

c) wobei der Bereich symmetrisch zur Symmetrielinie ist und an der Stelle 1 eine Breite b von

$$b(l) = 2 * l * \tan 15°$$

aufweist,

d) wobei die Variable 1 den Abstand zur Spitze entlang der Symmetrielinie bezeichnet.

Auch durch diese sowie die folgende Ausführungsform ergibt sich bevorzugt ein Winkelbereich zwischen -15° und +15° in Bezug auf eine Parallele zur Verbindungslinie, der einerseits eine gute Möglichkeit ist, die Eigenzentrierfähigkeit zu verbessern, wobei andererseits aber das Bohrwerkzeug im Bereich der Querschneide eine hinreichend hohe Stabilität aufweist. Eine Länge von 1/100 bis 1/10 des Bohrerdurchmessers ermöglicht in der Regel ebenfalls eine verbesserte Eigenzentrierfähigkeit, wobei zugleich der Rollradius der beim Bohren anfallenden Späne nicht zu groß ist.

Gemäß einer Ausbildungsform der Erfindung ist das Bohrwerkzeug um eine zentrale Werkzeugachse drehbar, wobei es wenigstens zwei an einer Stirnseite angeordnete Hauptschneiden aufweist, die in Richtung nach innen zur Werkzeugachse in wenigstens eine Querschneide übergehen, wobei die Querschneide in einem oder über einen die Werkzeugachse umgebenden Zentralbereich an der Stirnseite verläuft, wobei die Querschneide im durch die oder im Bereich der Werkzeugachse verlaufenden innersten Bereich und/oder innenseitig an einen Ausspitzungsbereich anschließend eine Restquerschneide ausbildet, wobei an den außenliegenden Enden der Hauptschneiden Schneidenecken ausgebildet sind, wobei eine gerade Verbindungslinie definiert ist, die durch zwei Schneidenecken einander bezüglich der Werkzeugachse gegenüberliegender Hauptschneiden oder, bei Fehlen einer gegenüberliegenden Hauptschneide, durch eine Schneidecke und die Werkzeugachse verläuft,

wobei die Querschneide, insbesondere der Querschneiden-Innenbereich, innerhalb eines Bereichs verläuft und/ oder sich erstreckt,

b) wobei der Bereich im oder in einem Querschnitt die Form eines Dreiecks aufweist,

c) wobei sich das Dreieck mit seiner Höhe von einer Spitze am Beginn des Querschneiden-Innenbereichs am äußeren Ende der Restquerschneide entlang einer parallel zur Verbindungslinie verlaufende Linie, insbesondere bis quer zum Ende des Querschneiden-Innenbereichs am inneren Krümmungsbereich und/oder bis zu einer Fußseite erstreckt,

d) wobei vorzugsweise die Höhe des Dreiecks 1/100

5       EP 2 237 913 B1       6

bis 1/10 des Bohrerdurchmessers beträgt,
e) wobei das Dreieck symmetrisch zur Höhe h ist und/oder gleichschenklig ist und/oder senkrecht zur Werkzeugachse verläuft,
f) wobei das Dreieck eine Breite b von

$$b = 2 * h * \tan 15°$$

aufweist.

In einer vorteilhaften Ausführungsform ist der Bereich eine Höhe parallel zur Werkzeugachse aufweist, die der halben Höhe des Dreiecks entspricht, wobei bevorzugt der Beginn des Querschneiden-Innenbereichs in der Mitte der Höhe des Bereichs angeordnet, wobei besonders bevorzugt der Bereich als Pyramide ausgebildet ist, mit dem Beginn des Querschneiden-Innenbereichs als Spitze. Dies verbessert ebenfalls die Eigenzentrierfähigkeit, wobei gleichzeitig die Bohrung eine hinreichende Qualität aufweist, was insbesondere bedeutet, dass an den Rändern der Bohrung lediglich zumindest vergleichsweise geringe Grate entstehen können.

Bevorzugt tritt die Querschneide in den Bereich an seiner Spitze ein und verlässt den Bereich an seiner Fußseite, wobei die Fußseite gerade verläuft und/oder unter einem Winkel von 90° zur Verbindungslinie.

In einer vorteilhaften Ausführungsform verlässt die Querschneide den Bereich unter einem Winkel von mindestens 25° zur Verbindungslinie und/oder unter einem Winkel von maximal 65° zur Fußseite. Dies ermöglicht eine gute Schneidwirkung der Hauptschneide, insbesondere da der Querschneidenaußenbereich nicht übermäßig lang ist.

Bevorzugt verläuft die Restquerschneide gerade und/oder
die Querschneide, vorzugsweise die Restquerschneide, bildet eine Zentrierspitze aus, und/oder die Restquerschneide ist die oder eine Zentrierspitze, wobei vorzugsweise die Zentrierspitze gerade verläuft, wobei bevorzugt zwischen der Zentrierspitze des Bohrwerkzeugs und einer zu bearbeiteten, insbesondere ebenen, Fläche ein Winkel, insbesondere ein Freiwinkel, von 8° bis 15°, vorzugsweise 10° bis 12°, vorliegt. Hierdurch kann das Zentrierverhalten weiter verbessert werden, wobei insbesondere eine gerade Restquerschneide zugleich deren Stabilität erhöht, da die Wahrscheinlichkeit des Ausbrechens und/oder Abbrechens verringert wird.

Das Bohrwerkzeug gemäß der Erfindung ist um eine zentrale Werkzeugachse drehbar und weist eine Stirnseite auf, also eine Seite an einem axial zur Werkzeugachse befindlichen Ende. An dieser Stirnseite sind wenigstens zwei Hauptschneiden angeordnet, die in Richtung nach innen zur Werkzeugachse in jeweils eine oder eine gemeinsame Querschneide übergehen. Die Querschneide verläuft in einem oder über einen die Werkzeugachse umgebenden oder um die Werkzeugachse zentral angeordneten Zentralbereich oder Kernbereich des Bohrwerkzeugs an dessen Stirnseite. Die Quetschneide weist nun wenigstens einen Bereich, insbesondere Ausspitzungsbereich, auf, in dem die Quetschneide von innen oder von der Mittelachse aus gesehen nach außen zu einer sich anschließenden Hauptschneide hin einen inneren Krümmungsbereich und anschließend einen äußeren Krümmungsbereich aufweist oder ausbildet, wobei der innere Krümmungsbereich entgegengesetzt zum äußeren Krümmungsbereich gekrümmt ist.

Diese besondere Form oder Ausspitzung der Querschneide führt zu einem günstig geformten Zentrierbereich oder einer Zentrierspitze an der Querschneide und ermöglicht dadurch eine bessere Eigenzentrierung des Bohrwerkzeugs, ohne dass die Abmessungen der Hauptschneiden deutlich beeinträchtigt werden müssen.

Bevorzugt weist der äußere Krümmungsbereich in Richtung zur Werkzeugachse eine Linkskrümmung und der innere Krümmungsbereich in Richtung zur Werkzeugachse eine Rechtskrümmung aus. Vorzugsweise bildet der äußere Krümmungsbereich eine konvexe Krümmung und der innere Krümmungsbereich eine konkave Krümmung aus. Zwischen dem äußeren Krümmungsbereich und den inneren Krümmungsbereich ist dabei Bevorzugt ein Wendepunkt ausgebildet, also ein Punkt, bei dem, geometrisch gesehen, die Krümmung wechselt von Linkskrümmung zu Rechtskrümmung oder umgekehrt oder, vom Standpunkt der Analysis, die zweite Ableitung ihr Vorzeichen wechselt. Diese genannten Ausführungsformen ermöglichen ein besonders einfaches Ausspritzen der Querschneide oder Ausbilden einer Zentrierspitze an der Querschneide

In einer vorteilhaften Ausführungsform befindet sich der äußere Krümmungsbereich der Querschneide im Übergangsbereich oder unmittelbar benachbart zur Hauptschneide. Der Übergang der Querschneide in die Hauptschneiden erfolgt im Allgemeinen, arm Außenrand des Zentralbereichs.

Bevorzugt ist einer der beiden oder sind beide entgegengesetzt zueinander gekrümmte Krümmungsbereiche durch eine Abrundung der Querschneide ausgebildet, insbesondere mit glatten oder stetig differenzierbaren Übergängen. Dies ermöglicht einen gleichmäßigen Übergang von Hauptschneide zu Querschneide und damit von innen nach außen ein gleichmäßiges Bohrverhalten. Der Krümmungsradius des äußeren Krümmungsbereichs kann konstant oder auch veränderlich sein und ist insbesondere aus einem Bereich zwischen 0,08 mm und 3 mm gewählt. Auch der Krümmungsradius des inneren Krümmungsbereichs kann konstant oder auch variabel sein und ist insbesondere aus einem Bereich zwischen 0,1 mm und 1 mm gewählt. Der oder die Krümmungsbereich kann bzw.. können aber auch praktisch eckig oder mit noch kleinerem Krümmungsradius ausgebildet sein.

Die Querschneide bildet in ihrem wenigstens einen Ausspitzungsbereich, einen geraden oder linearen Querschneiden-Außenbereich und daran innenseitig an-

4

grenzend einen geraden oder linearen Querschneiden-Innenbereich aus, wobei der innere Krümmungsbereich der Querschneide zwischen dem Querschneiden-Außenbereich und dem Querschneiden-Innenbereich angeordnet ist oder liegt. Insbesondere bei zumindest annähernd gerader Ausbildung des Querschneiden-Innenbereichs ist eine besonders gute und wirksame Ausbildung des Zentrierbereichs möglich. Es liegt dann im Allgemeinen der äußere Krümmungsbereich der Querschneide an dem Rand des Querschneiden-Außenbereichs zur Hauptschneide hin.

Es wird nun bevorzugt eine gerade Verbindungslinie definiert, die durch zwei Schneidenecken, die sich an den außenliegenden Enden zweier einander bezüglich der Werkzeugachse gegenüberliegender Hauptschneiden befinden, verläuft, oder, bei Fehlen einer gegenüberliegenden Hauptschneide, durch die Schneidecke einer Hauptschneide und die Werkzeugachse verläuft.

Der Querschneiden-Innenbereich verläuft nun Bevorzugt unter einem Winkel zur Verbindungslinie, der in einem Bereich von -20° bis 30°, bevorzugt von -15° bis 15°, besonders bevorzugt von 0° (also Parallelität) bis 10° gewählt ist. Besonders vorteilhaft ist es, wenn der Querschneiden-Innenbereich zumindest überwiegend parallel zur Verbindungslinie verläuft. Diese Ausführung ermöglicht die Ausbildung einer besonders ausgeprägten oder hinsichtlich der Eigenzentrierung des Bohrwerkzeugs günstigen Zentrierspitze an der Querschneide.

In einer vorteilhaften Ausführungsform weist oder bildet die Querschneide eine sogenannte Restquerschneide aus, die im durch die oder im Bereich der Werkzeugachse verlaufenden innersten Bereich und/oder innenseitig an den Ausspitzungsbereich der Querschneide angeordnet ist und/oder in einem an der Stirnseite des Werkzeugs befindlichen Stirnflächen trennenden Bereich der Querschneide liegt.

Folgende weitere Winkel werden hinsichtlich der Querschneide bevorzugt gewählt:

- zwischen Querschneiden-Innenbereich und Querschneiden-Außenbereich ein stumpfer Winkel, der vorzugsweise in einem Bereich von 130° bis 160°, insbesondere 145° bis 150°, liegt;
- zwischen Querschneiden-Außenbereich und Verbindungslinie ein spitzer Winkel, der insbesondere aus einem Bereich von 20° bis 50°, insbesondere von 30° bis 35°, gewählt ist;
- zwischen Querschneiden-Innenbereich und Restquerschneide ein stumpfer Winkel, bevorzugt aus einem Bereich von 110° bis 140° oder, besonders bevorzugt, aus einem Bereich von 120° bis 150°, insbesondere von 125° bis 135°;
- zwischen Restquerschneide und Verbindungslinie ein spitzer Winkel, besonders bevorzugt aus einem Bereich von 40° und 60°, insbesondere etwa 55°;
- Summe des Winkels zwischen Querschneiden-Innenbereich und Restquerschneide einerseits und dem Winkel zwischen Restquerschneide und Verbindungslinie andererseits aus einem Bereich von 170° bis 190°, vorzugsweise einem Bereich von 180° bis 190°.

Diese Formen und Winkel verbessern die Eigenzentrierfähigkeit weiter, ohne das Bohrverhalten zu verschlechtern, da so eine deutliche besonders starke Ausspitzung im Bereich der Querschneide möglich ist, die einerseits den Zentrierbereich deutlicher herausheben kann, andererseits jedoch die Hauptschneiden nicht beeinträchtigt.

Bevorzugt beträgt die Länge des Querschneiden-Innenbereichs zwischen 1/100 und 1/10 des Bohrerdurchmessers.

In einer vorteilhaften Ausführungsform ist der Zentrierbereich in einer durch die Restquerschneide ausgebildeten Schnittebene durch den Ausspitzungsbereich begrenzt und/oder geht in einer durch die Verbindungslinie ausgebildeten Schnittebene in Stirnflächen über. Dies ermöglicht die Ausbildung eines Zentrierbereichs, der eine andere Form aufweist, je nachdem von welcher Seite er betrachtet wird, was das Anbohrverhelten weiter verbessert.

Bevorzugt werden die Stirnflächen von wenigstens einer Stirnflächenkante und/oder einer Hauptschneide begrenzt und sind vorzugsweise mit einem Kegelmantelanschliff oder einem Flächenanschliff versehen. Dabei können die Stirnflächen entweder jeweils eine oder auch mehrere, winklig zueinander angeordnete Flächen aufweisen.

Bevorzugt sind die Querschneide und/oder die Restquerschneide und/oder der Ausspitzungsbereich durch einen Kegelmantelanschliff oder einen Flächenanschliff oder ein 4-Flächenschleifverfahten erzeugt Dies ermöglicht oder erleichtert eine zumindest relativ effiziente und/oder kostengünstige Herstellung des Bohrwerkzeugs.

Bevorzugt ist wenigstens eine Hauptschneide gerade oder entlang ihres Verlaufs in die gleiche Richtung gekrümmt und/oder konkav oder konvex ausgebildet.

In einer vorteilhaften Ausführungsform sind die Hauptschneiden auf Tragkörpern oder Tragbereichen angeordnet, die sich radial vom Zentralbereich nach außen erstrecken und in axialer Richtung, vorzugsweise wendelförmig, verlaufen, insbesondere zwischen den Spannuten, und die auf ihren Seitenflächen die Spanflächen und auf ihren Außenflächen einen Rücken ausbilden. Dies ermöglicht einen effizienten Abttansport der Späne.

Bevorzugt weist

a) das Bohrwerkzeug Fasen auf, die den maximalen Durchmesser des Bohrwerkzeugs bestimmen,
b) wobei das Bohrwerkzeug zwischen den Fasen einen geringeren Durchmesser aufweist, insbesondere im Bereich des Rückens.

Dies verbessert die Führung des Bohrwerkzeugs im Bohrloch.

In einer vorteilhaften Ausführungsform weist das Werkzeug wenigstens zwei Spannuten auf, die an der Stirnseite münden, wobei die Hauptschneiden an einem stirnseitigen Ende der Spannuten angeordnet sind, wobei bevorzugt zwischen den Spannuten Kühlmittelkanäle angeordnet sind. Über die Kühlmittelkanäle ist die Zufuhr eines Kühlmittels während des Bohtvorgangs möglich, wobei dieses auch über einen Seitenkanal in die Spannuten geleitet werden kann.

Bevorzugt erstreckt der Ausspitzungsbereich sich über die Spanfläche, vorzugsweise über die erste und die zweite Spanfläche und/oder über eine Tiefe von maximal 50% des Durchmessers des Bohrers. Auf diese Weise ist gewährleistet, dass das Bohrwerkzeug, insbesondere die Spannuten im von den Stirnflächen abgewandten Bereich, von der Ausspitzung nur in geringer Weise beeinträchtigt wird.

In einer vorteilhaften Ausführungsform ist der Ausspitzungsbereich so ausgebildet, insbesondere mittels einer Einfasung, dass er wenigstens eine Querschneide von der Stirnseite her gesehen in einer S- Form erscheinen lässt (S- Ausspitzung) .

Die Ausgestaltung des Bohrwerkzeugs gemäß der Erfindung ist besonders vorteilhaft bei einem Bohrwerkzeug aus evtl. Hartmetall, insbesondere Vollhartmetall (VHM), kann aber ebenso bei Bohrern aus anderen Materialien wie Arbeitsschnellstählen oder Hochleistungsschnellstählen (HSS) Anwendung finden.

Die Erfindung wird im Folgenden anhand von Ansführungsbeispielen erläutert. Dabei wird auch auf die Zeichnungen Bezug genommen, deren

FIG 1a      den Stirnbereich eines erfindungsgemäßen Bohrwerkzeugs in perspektivischer Darstellung,

FIG 1b      den Stirnbereich des erfindungsgemäßen Bohrwerkzeugs gemäß FIG 1a in einer gegenüber FIG 1a leicht gedrehten perspektivischer Darstellung,

FIG 2      eine stirnseitige Ansicht des erfindungsgemäßen Bohrwerkzeugs gemäß FIG 1a,

FIG 3a      einen Ausschnitt aus einer stirnseitigen Ansicht des Bohrers gemäß den FIG 1a bis 2,

FIG 3b      ebenfalls den Ausschnitt gemäß FIG 3a,

FIG 4      ein Schattenbild der Bohrerspitze unter 90° zur Restquerschneide,

FIG 5a, 5b      einen Ausschnitt aus einer weiteren Ausführungsform des erfindungsgemäßen Bohrwerkzeugs und deren

FIG 6a, 6b      einen Ausschnitt aus einer weiteren Ausführungsform des erfindungsgemäßen Bohrwerkzeugs

jeweils schematisch zeigen.

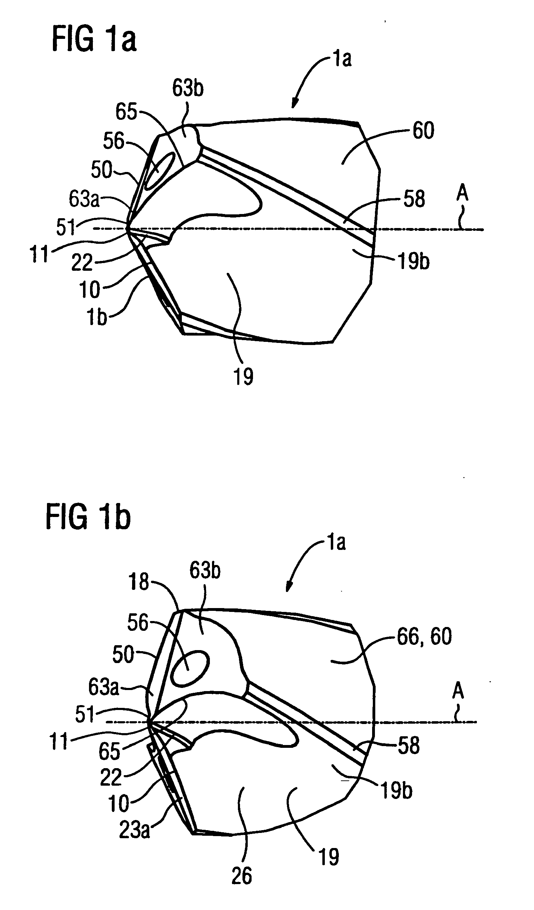

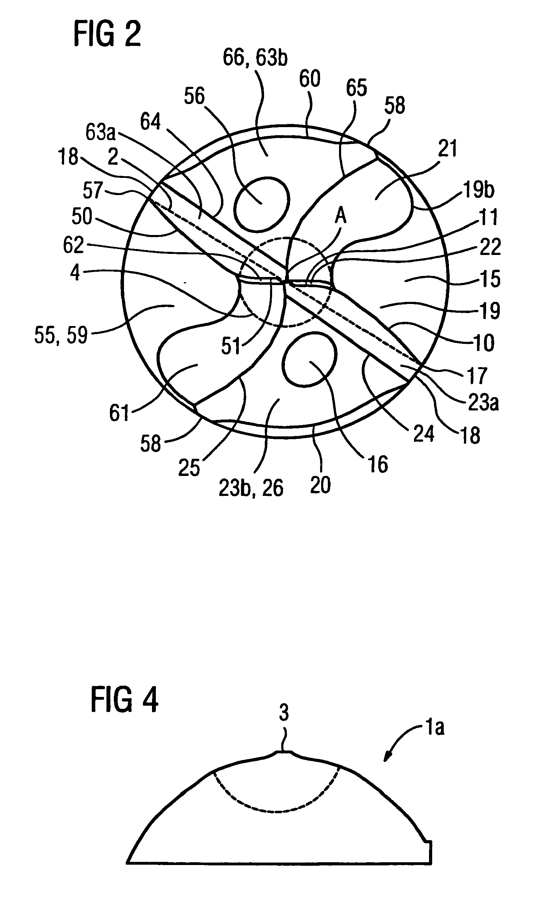

FIG 1a zeigt die Stirnseite eines Bohrers 1, von der Seite her gesehen, FIG 1b zeigt die Bohrerspitze 1a gemäß FIG 1a in einer gegenüber FIG 1a leicht gedrehten Ansicht, ebenfalls von der Seite her gesehen. FIG 2 zeigt den

Darin ist insbesondere in FIG 2 ein Bohrer 1 mit zwei sich in entgegengesetzten Richtungen erstreckenden Hauptschneiden 10 und 50 erkennbar.

Die Hauptschneide 10 ist auf einem Tragbereich 26, die Hauptschneide 50 auf einem Tragbereich 66 angeordnet, die jeweils von einem Zentralbereich 4 ausgehen.

Am Außenende bildet die Hauptschneide 10 eine Schneidenecke 17, die Hauptschneide 50 eine Schneidenecke 57 aus. Zwischen den Schneidenecken 17 und 57 ist eine Verbindungslinie 2 gezeichnet.

Der Tragbereich 26 wird stirnseitig von nebeneinander winklig angeordneten Stirnflächen 23a und 23b begrenzt, der Tragbereich 66 wird stirnseitig von nebeneinander winklig angeordneten Stirnflächen 63a und 63b begrenzt.

Die Stirnflächen 23a und 23b sind im dargestellten Ausführungsbeispiel ferner durch eine Stirnflächenkante 24 und die Stirnflächen 63a und 63b durch eine Stirnflächenkante 64 miteinander verbunden.

An ihrer der Stirnflächenkante 24 gegenüberliegenden Seite ist die Stirnfläche 23a durch die Hauptschneide 10 sowie die Querschneide 11 begrenzt. An ihrer der Stirnflichenkante 64 gegenüberliegenden Seite ist entsprechend die Stirnfläche 63a durch die Hauptschneide 50 sowie die Querschneide 51 begrenzt. Die Stirnfläche 23a wird nach außen hin durch den Rücken 20, die Stirnfläche 63a wird nach außen hin durch den Rücken 60 begrenzt.

Auf ihrer von der Hauptschneide 10 abgewandten Seite weist die Stirnfläche 23b eine Stirnflächenkante 25 auf. Diese begrenzt einen Ausspitzungsbereich 21, der das stirnseitige Ende einer Spannut 55 ausbildet. Entsprechend weist die Stirnfläche 63b auf ihrer von der Hauprschneide 50 abgewandten Seite eine Stirnflächenkante 65, die einen Ausspitzungsbereich 61, der das stirnseitige Ende einer Spannut 25 ausbildet, begrenzt.

Die Stirnfläche 23b hat im Bereich der Stirnflächenkante 25 eine Kühlmittelbohrung 16. Die Stirnfläche 63b weist im Bereich der Stirnflächenkante 65 ebenfalls eine Kühlmittelbohrung 56 auf. Die Spannut 15 wird begrenzt durch eine Spanfläche 19 und eine Nutrückenfläche 19b umfasst, die insbesondere winklig zueinander sind.

Auch die Spannut 55 wird begrenzt durch eine Spanfläche 59 und eine Nutrückenfläche 59b.

Der Ausspitzungsbeteich 21 am stirnseitigen Ende der Spannut 15 erstreckt sich von der Spanfläche 19 zur Nutrückenfläche 19b von der Stirnseite weg und endet in einem Bogen oder etwa u-förmig, wobei er eine Tiefe von etwa 30% des Bohrerdurchmessers B aufweist.

Der Ausspitzungsbereich 51 am stirnseitigen Ende der Spannut 65 erstreckt sich entsprechend von der Spanfläche 59a zur Nutrückenfläche 59b von der Stirnseite weg und endet ebenfalls in einem Bogen oder in etwa u-förmig, wobei er eine Tiefe von etwa 30% des Bohrerdurchmessers B aufweist.

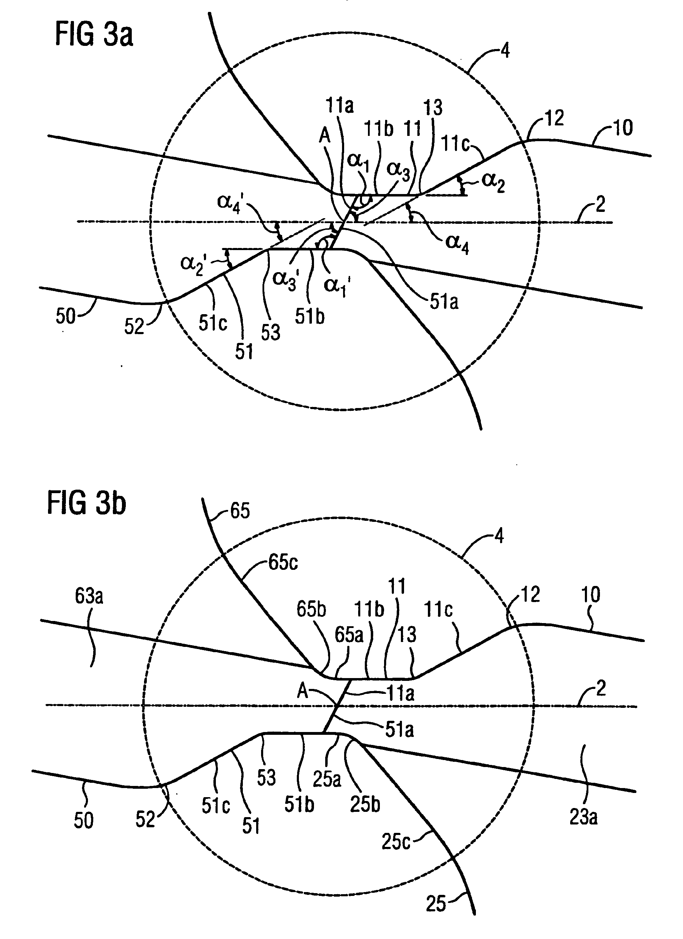

Die Hauptschneide 10 geht, wie aus FIG 3b ersichtlich, nach innen in Richtung zum Zentralbereich 4 über einen äußeren Krümmungsbereich 12 mit einer Linkskrümmung in eine Querschneide 11 über. Die Hauptschneide 50 geht nach innen in Richtung zum Zentralbereich 4 über einen äußeren Krümmungsbereich 52 mit einer Linkskrümmung in die Querschneide 51 über.

Die (zusammengesetzte) Querschneide 11, 51 verbindet somit die Hauptschneiden 10 und 50.

Die Restquerschneide 11a der Querschneide 11 umfasst einen die Stirnflächen 23a und 63a verbindenden Teil und wird im übrigen durch die Ausspitzungsbereiche 21 und 61 in ihrer Länge begrenzt.

Der ausgespitzte Bereich der Querschneide 11 wiederum weist innenseitig in Richtung zum Zentralbereich 4 an den äußeren Krümmungsbereich 12 angrenzend einen Querschneiden-Außenbereich 11c auf, der über einen inneren, nach links gekrümmten Krümmungsbereich 13 in den Querschneiden-Innenbereich 11b übergeht, der seinerseits an die Restquerschneide 11a angrenzt.

Der ausgespitzte Bereich der Querschneide 51 wiederum weist innenseitig angrenzend in Richtung zum Zentralbereich 4 an den äußeren Krümmungsbereich 52 einen Querschneiden-Außenbereich 51c auf, der über einen inneren, nach links gekrümmten Krümmungsbereich 53 in den Querschneiden-Innenbereich 51b übergeht, der seinerseits an die Restquerschneide 51a angrenzt.

Der Querschneiden-Innenbereich 11b sowie der Querschneiden-Innenbereich 51b sind jeweils wenigstens überwiegend geradlinig ausgebildet und verlaufen dabei parallel zur Verbindungslinie 2 zwischen den Schneidenecken 17 und 57.

An den Querschneiden-Innenbereich 11b schließt sich nach der Abzweigung der Restquerschneide 11a geradlinig ein Stirnflächenkanten-Innenbereich 65a an, der insofern ebenfalls parallel zur Verbindungslinie 2 ist. An den Querschneiden-Innenbereich 51b schließt sich in gleicher Weise nach der Abzweigung der Restquerschneide 51a geradlinig ein Stirnflächenkanten-Innenbereich 25a an, der insofern ebenfalls parallel zur Verbindungslinie 2 ist.

Der Stirnflächenkanten-Innenbereich 25a ist andernends begrenzt durch einen Krümmungsbereich 25b, bei dem er in den Stirnflächenkanten-Außenbereich 25c übergeht. Der Stirnflächenkanten-Innenbereich 65a ist andernends begrenzt durch einen Krümmungsbereich 65b, bei dem er in den Stirnflächenkanten-Außenbereich 65c übergeht.

Der Ausspitzungsbereich 21 bildet gemäß FIG 2 eine Einfasung 22 aus. Die Einfasung 22 und der Ausspitzungsbereich 21 lassen die Querschneide 11 von der Stirnseite 1b her gesehen in einer S-Form erscheinen. Der Ausspitzungsbereich 61 bildet entsprechend eine weitere Einfassung 62 aus, die zusammen mit dem übrigen Ausspitzungsbereich 61 die Querschneide 51 von der Stirnseite 1b her gesehen in einer S-Form erscheinen lässt.

Der Querschneiden-Innenbereich 11b und die Restquerschneide 11a schließen einen stumpfen Winkel $\alpha_1$ miteinander ein oder bilden diesen aus, der insbesondere zwischen 120° und 140°, vorzugsweise etwa 125°, beträgt. Der Querschneiden-Innenbereich 51b und die Restquerschneide 51a schließen ebenfalls einen stumpfen Winkel $\alpha_1'$ miteinander ein, der insbesondere zwischen 120° und 140°, vorzugsweise etwa 125°, gewählt ist.

Zwischen Querschneiden-Innenbereich 11b und Querschneiden-Außenbereich 11c ist der innere Krümmungsbereich 13 unter einem spitzen Krümmungswinkel $\alpha_2$ von etwa. 20° bis 50°, insbesondere etwa 30° bis 35°, ausgebildet. Zwischen Querschneiden-Innenbereich 51b und Querschneiden-Außenbereich 51c ist entsprechend der innere Krümmungsbereich 53 unter einem spitzen Krümmungswinkel $\alpha_2'$ von etwa 20° bis 50°, insbesondere etwa 30° bis 35°, angeordnet. Somit liegt zwischen Querschneiden-Innenbereich 11b bzw. 51c und zugehörigem Querschneiden-Außenbereich 11c bzw. 51c ein nicht eingezeichneter stumpfer Winkel 180°-$\alpha_2$ bzw. 180°-$\alpha_2'$.

Der Winkel $\alpha_3$ zwischen der Restquerschneide 11a und der Verbindungslinie 2 ist in FIG 3a 180° - $\alpha_1$, und liegt somit insbesondere zwischen 40° und 60°, insbesondere bei 55°. Entsprechend beträgt der Winkel $\alpha_3'$ zwischen der Restquerschneide 51a und der Verbindungslinie 2 in FIG 3a 180° - $\alpha_1'$ und liegt somit ebenfalls insbesondere zwischen 40° und 60°, insbesondere bei 55°.

Der Winkel $\alpha_4$ zwischen Querschneiden-Außenbereich 11c und Verbin-dungslinie 2 entspricht im dargestellten Ausführungsbeispiel dem Winkel $\alpha_2$ zwischen Querschneiden-Innenbereich 11b und Querschneiden-Außenbereich 11c. Entsprechend gilt für den Winkel $\alpha_4'$ zwischen Querschneiden-Außenbereich 51c und Verbindungslinie 2, dass dieser dem Winkel $\alpha_2'$ zwischen Querschneiden-Innenbereich 51b und Querschneiden-Außenbereich 51c gleich ist. Die Verbindungslinie 2 und die beiden Querschneiden-Innenbereiche 11c und 51 c sind also in FIG 3a jeweils parallel zueinander gerichtet.

Außer der dargestellten Ausführungsform mit zur Verbindungslinie 2 parallelen Querschneiden-Innenbereichen 11b und 51b kann aber auch eine Neigung jedes Querschneiden-Innenbereiches 11b und 51b zur Verbindungslinie 2 unter einem Winkel von bis zu 10° vorgesehen sein, vorzugsweise nach außen.

Die Länge des Querschneiden-Innenbereich 11b beträgt zwischen 1/100 und 1/10 des Bohrerdurchmessers, ebenso die Länge des Querschneiden-Innenbereich 51b.

FIG 4 zeigt ein Schattenbild oder eine Lichtprojektion wie in einem Mikroskop betrachtet von der Bohrerspitze 1a in einem Winkel von 90° zum Restquerschneidenwinkel. Deutlich erkennbar ist eine an der oder durch die (ausgespitzte) Querschneide ausgebildete gerade Zentrierspitze 3, die ein einfacheres Zentrieren des Bohrwerkzeugs 1 ermöglicht, wobei zugleich die Wahrscheinlichkeit eines Ausbrechens der Zentrierspitze zumindest relativ gering ist.

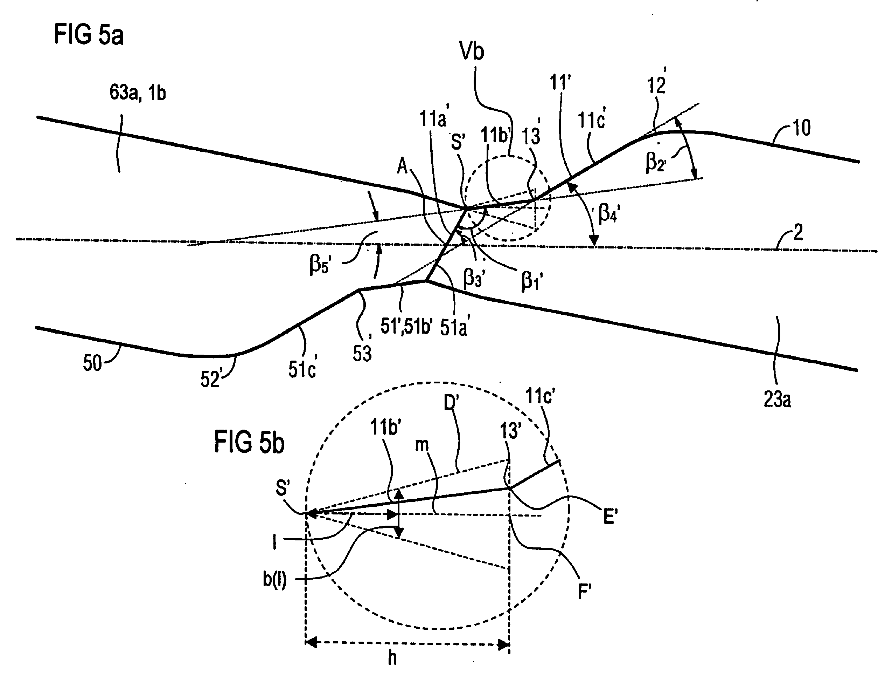

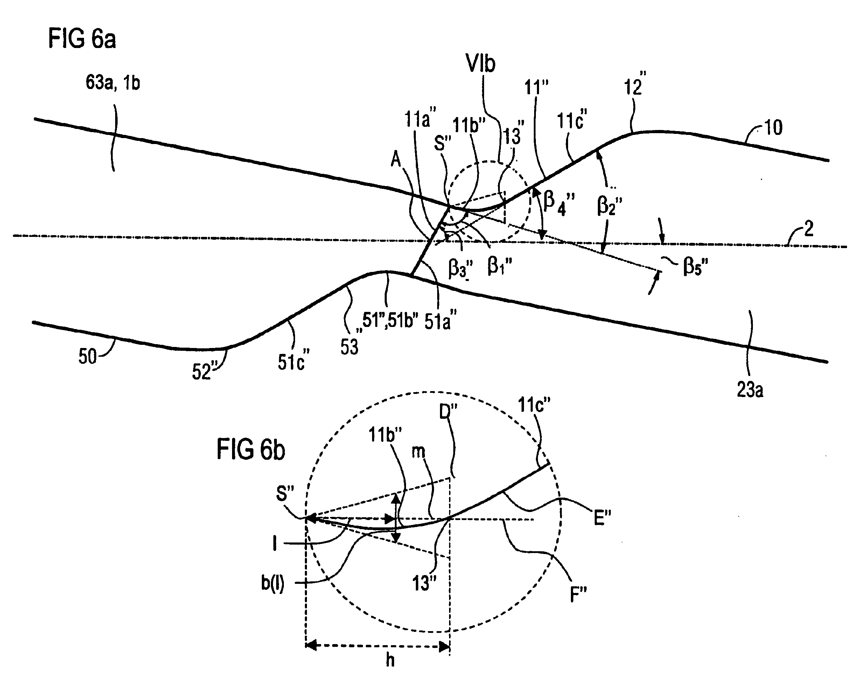

Die Figuren 5a und 5b sowie 6a und 6b zeigen, jeweils schematisch, zwei weitere Ausführungsformen der erfindungsgemäßen Querschneiden.

Im Unterschied zur Ausbildungsform gemäß den Figuren 3a und 3b ist bei der Ausführungsform gemäß den Figuren 5a und 5b der Querschneiden-Innenbereich 11b' nicht parallel zur Verbindungslinie 2, sondern unter einem Winkel von etwa 8° zu dieser ausgebildet. Dies ist als Winkel $\beta5'$ in FIG 5a erkennbar. Hierdurch ergibt sich zwischen dem Querschneiden-Außenbereich 11c' und dem Querschneiden-Innenbereich 11b' ein Winkel $\beta2'$, der im Bereich von etwa 25°, vorzugsweise darüber, liegt. Des weiteren erhöht sich der Winkel $\beta1'$ zwischen Restquerschneide 11a' und Querschneiden-Innenbereich 11b' auf einen Wert von etwa 130°. Der Winkel $\beta4'$ des Querschneiden-Außenbereichs 11c' zur Verbindungslinie 2' beträgt etwa 30°. Die Länge des Querschneiden-Innenbereichs 11b' liegt dabei bei etwa 1/50 des Bohrerdurchmessers B. Der Querschneiden-Innenbereich 11b' verläuft zumindest im Wesentlichen linear.

Der Querschneiden-Innenbereich 11b' verläuft innerhalb eines Bereichs D', der sich von seinem Beginn S' am äußeren Ende der Restquerschneide 11a' bis zu quer zum Ende E' des inneren Krümmungsbereichs 13' parallel zur Verbindungslinie 2 über eine Länge h von etwa 1/50 des Bohrerdurchmessers B erstreckt, wobei die Breite b des Bereichs quer zur Verbindungslinie 2 an der Stelle 1

$$b(l) = 2 * l * \tan 15°$$

ist. Die Variable 1 bezeichnet den Abstand zum nächstgelegenen Punkt auf der Verbindungslinie 2.

Der Bereich D' ist somit in diesem Fall ein gleichschenkliges Dreieck, dessen Höhe etwa 1/50 des Bohrwerkzeugdurchmessers B beträgt, und dessen gleiche Winkel jeweils 75° betragen. Innerhalb dieses Bereichs D' liegt an jedem Punkt der Winkel einer gedachten Gerade durch diesen Punkt und das Ende der Restquerschneide S' zur Verbindungslinie 2 zwischen +15° und -15°.

Entsprechendes gilt jeweils für die Querschneide 51' mit ihrem Querschneiden-Innenbereich 51b' und ihrem Querschneiden-Außenbereich 51c'.

Eine weitere erfindungsgemäße Ausführungsform zeigen die Figuren 6a und 6b, bei der der innere Krümmungsbereich 13" zwischen dem Querschneiden-Innenbereich 11b" und dem Querschneiden-Außenbereich 11c" näher am Ende der Restquerschneide S" angeordnet ist als bei FIG 5a und 5b. In diesem Fall beträgt der Winkel $\beta5"$ zwischen dem Querschneiden-Innenbereich 11 b" und der Verbindungslinie 2 etwa -15°. Weiterhin beträgt der Winkel zwischen dem Querschneiden-Innenbereich 11b" und dem Quer-schneiden-Außenbereich 11c" etwa 45°. Der Winkel $\beta1"$ zwischen Querschneiden-Innenbereich 11b" und der Restquerschneide 11a" beträgt in diesem Fall etwa 95°.

Der Querschneiden-Innenbereich 11b" verläuft innerhalb eines Bereichs D", der sich von seinem Beginn S" am äußeren Ende der Restquerschneide 11a" bis zu quer zum Ende E" im inneren Krümmungsbereich 13" parallel zur Verbindungslinie 2 über eine Länge 1 von etwa 1/60 des Bohrerdurchmessers B erstreckt, wobei die Breite b des Bereichs quer zur Verbindungslinie 2 an der Stelle 1

$$b(l) = 2 * l * \tan 15°$$

ist. Die Variable 1 bezeichnet den Abstand zum Punkt S' entlang der Verbindungslinie 2.

Der Bereich D" ist somit ebenfalls ein gleichschenkliges Dreieck, dessen Höhe etwa 1/60 des Bohrwerkzeugdurchmessers B berägt, und dessen gleiche Winkel jeweils 75° betragen. Innerhalb des Bereichs D" liegt an jedem Punkt der Winkel einer gedachten Gerade durch diesen Punkt und das Ende der Restquerschneide S" zur Verbindungslinie 2 zwischen +15° und -15°.

Entsprechendes gilt jeweils wieder für die Querschneide 51" mit ihren Krümmungsbereichen 52" und 53".

Der Querschneiden-Innenbereich bewegt sich insofern allgemein in einem Bereich der Länge von 0,01 bis 0,1 des Bohrerdurchmessers B innerhalb eines Winkelbereichs von $\alpha5$ von -15° bis +15° zur Verbindungslinie 2.

Der Winkel $\alpha1$ zwischen Restquerschneide und Querschneiden-Innenbereich liegt in einem Bereich von etwa 120° bis 150° bzw. von 110° bis 140 °.

Die Restquerschneide ist gerade ausgebildet und wurde mit einem herkömmlichen Kegelmantel- und/ oder Vierflächenschleifverfahren hergestellt

**Patentansprüche**

1. Bohrwerkzeug (1),

    a) das um eine zentrale Werkzeugachse (A) drehbar ist,
    b) das wenigstens zwei an einer Stirnseite (1b) angeordnete Hauptschneiden (10, 50) aufweist, die in Richtung nach innen zur Werkzeugachse (A) in wenigstens eine Querschneide (11, 51, 11', 51', 11", 51") übergehen,
    c) wobei die Querschneide (11, 51, 11', 51', 11", 51") in einem oder über einen die Werkzeugachse (A) umgebenden Zentralbereich (4) an der Stirnseite (1a) verläuft,

d) wobei die Querschneide (11, 51, 11', 51', 11", 51") im durch die oder im Bereich der Werkzeugachse (A) verlaufenden innersten Bereich und/oder innenseitig an einen Ausspitzungsbereich (21, 61) anschließend eine Restquerschneide (11a, 51 a, 11a', 51a'; 11a", 51a"') ausbildet,

e) wobei an den außenliegenden Enden der Hauptschneiden (10, 50) Schneidenecken (17, 57) ausgebildet sind,

f) wobei eine gerade Verbindungslinie (2) definiert ist, die durch zwei Schneidenecken (17, 57) einander bezüglich der Werkzeugachse (A) gegenüberliegender Hauptschneiden (10, 50) oder, bei Fehlen einer gegenüberliegenden Hauptschneide, durch eine Schneidecke (17, 57) und die Werkzeugachse (A) verläuft,

g) wobei ein Querschneiden-Innenbereich vom äußeren Ende der Restquerschneide (11a', 51a'; 11a", 51a") weg innerhalb eines Bereichs (D', D") mit einem Winkel zwischen -15° und +15° in Bezug auf eine Parallele (m) zur Verbindungslinie (2) verläuft und eine Länge von 1/100 bis 1/10 des Bohrerdurchmessers B, vorzugsweise bis zur Fußseite (F', F") des Bereichs (D', D"), aufweist,

**dadurch gekennzeichnet dass**

h) die Querschneide (11, 51, 11', 51', 11", 51"), insbesondere in wenigstens einem Ausspitzungsbereich (21, 61), von innen oder von der Mittelachse aus nach außen zu einer Hauptschneide gesehen einen inneren Krümmungsbereich (13, 53, 13', 53', 13", 53") und einen äußeren Krümmungsbereich (12, 52, 12', 52', 12", 52") ausbildet,

i) wobei der innere Krümmungsbereich (13, 53, 13', 53', 13", 53") entgegengesetzt zum äußeren Krümmungsbereich (12, 52, 12', 52', 12", 52") gekrümmt ist,

j) wobei die Querschneide (11, 51, 11', 51', 11", 51") in ihrem wenigstens einen Ausspitzungsbereich (21, 61) einen geraden oder linearen QuerschneidenAußenbereich (11c, 51c, 11c', 51c', 11c", 51c") und daran nach innen angrenzend einen geraden oder linearen Querschneiden-Innenbereich (11b, 51b, 11b', 51b', 11b", 51b") aufweist, wobei zwischen Querschneiden-Innenbereich (11b, 51b, 11b', 51b', 11b", 51b") und Querschneiden-Außenbereich (11c, 51c, 11c', 51c', 11c", 51c") der innere Krümmungsbereich (13, 53, 13', 53', 13", 53") angeordnet ist.

2.  Bohrwerkzeug nach Anspruch 1,

    a) wobei der Bereich (D', D") eine Höhe parallel zur Werkzeugachse (A) aufweist, die der halben Höhe des Dreiecks entspricht, wobei bevorzugt der Beginn (S', S") des Querschneiden-Innenbereichs (11b', 11b") in der Mitte der Höhe des Bereichs (D', D") angeordnet ist und

    b) wobei besonders bevorzugt der Bereich (D', D") als Pyramide ausgebildet ist, mit dem Beginn (S', S") des Querschneiden-Innenbereichs (11b', 11b") als Spitze.

3.  Bohrwerkzeug nach einem der vorhergehenden Ansprüche,

    a) wobei die Querschneide (11', 51', 11", 51") in den Bereich (D', D") an seiner Spitze (S', S") eintritt und den Bereich (D', D") an seiner Fußseite (F', F") verlässt und

    b) wobei die Fußseite (F', F") gerade verläuft und unter einem Winkel von 90° zur Verbindungslinie (2).

4.  Bohrwerkzeug nach einem der vorhergehenden Ansprüche,
    wobei die Querschneide (11', 51', 11", 51") den Bereich (D', D") unter einem Winkel ($\beta_4'$, $\beta_4''$) von mindestens 25° zur Verbindungslinie (2) und/oder unter einem Winkel von maximal 65° zur Fußseite (F) verlässt.

5.  Bohrwerkzeug nach Anspruch 4,

    a) wobei der äußere Krümmungsbereich (12, 52, 12', 52', 12", 52") nach innen oder in Richtung zur Werkzeugachse (A) eine Linkskrümmung und der innere Krümmungsbereich (13, 53, 13', 53', 13", 53") nach innen oder in Richtung zur Werkzeugachse (A) eine Rechtskrümmung aufweisen oder der äußere Krümmungsbereich (12, 52, 12', 52', 12", 52") eine konvexe Krümmung und der innere Krümmungsbereich (13, 53, 13', 53', 13", 53") eine konkave Krümmung aufweisen oder zwischen äußerem Krümmungsbereich (12, 52, 12', 52', 12", 52") und innerem Krümmungsbereich (13, 53, 13', 53', 13", 53") ein Wendepunkt ausgebildet ist,

    b) wobei sich der äußere Krümmungsbereich (12, 52, 12', 52', 12", 52") im Übergangsbereich oder unmittelbar benachbart zur Hauptschneide (10, 50) befindet und wobei der Übergang der Querschneide (11, 51, 11', 51', 11", 51") in die Hauptschneiden (10, 50) am Außenrand des Zentralbereichs (4) erfolgt.

6.  Bohrwerkzeug nach einem des vorhergehenden Ansprüche,

    a) bei dem der Krümmungsradius des äußeren Krümmungsbereichs (12, 52, 12', 52', 12", 52") konstant oder veränderlich ist oder aus einem Bereich zwischen 0,08 mm und 3 mm gewählt ist und

b) bei dem der Krümmungsradius des inneren Krümmungsbereichs (13, 53, 13', 53', 13", 53") konstant oder veränderlich ist oder aus einem Bereich zwischen 0,1 mm und 1 mm gewählt ist.

7. Bohrwerkzeug nach einem der vorhergehenden Ansprüche, bei dem Querschneiden- Innenbereich (11b, 511b, 11b', 51b', 11b", 51b") und Querschneiden- Außenbereich (11c, 51c, 11c', 51c', 11c", 51c") einen Winkel (180°- $\alpha_2$, 180°- $\alpha_2$', 180°~$\beta_2$', 180°- $\beta_2$") einschließen, der vorzugsweise ein stumpfer Winkel ist und/ oder zwischen 130° bis 160°, insbesondere 145° bis 150°, liegt.

8. Bohrwerkzeug nach einem der vorhergehenden Ansprüche, bei dem

a) an den außenliegenden Enden der Hauptschneiden (10, 50) Schneidenecken (17, 57) ausgebildet sind und

b) eine gerade Verbindungslinie (2) definiert ist, die durch zwei Schneidenecken (17, 57) einander bezüglich der Werkzeugachse (A) gegenüberliegender Hauptschneiden (10, 50) oder, bei Fehlen einer gegenüberliegenden Hauptschneide, durch eine Schneidecke (17, 57) und die Werkzeugachse (A) verläuft.

9. Bohrwerkzeug nach einem der vorhergehenden Ansprüche,

a) bei dem der Querschneiden-Innenbereich (11b, 51b, 11b', 51b', 11b", 51b") unter einem Winkel ($\beta_5$', $\beta_5$") zur Verbindungslinie (2) verläuft, der in einem Bereich von -15° bis 15°, bevorzugt von 0° bis 10°, gewählt ist, wobei der Querschneiden-Innenbereich (11b, 51b, 11b', 51b', 11b", 51b") bevorzugt zumindest überwiegend parallel zur Verbindungslinie (2) verläuft und

b) bei dem der Querschneiden-Außenbereich (11c, 51c, 11c', 51c', 11c", 51c") unter einem Winkel ($\alpha_4$, $\alpha_4$', $\beta_4$', $\beta_4$") zur Verbindungslinie (2) verläuft, der aus einem Bereich von 20° bis 50°, insbesondere von 30° bis 35°, gewählt ist.

10. Bohrwerkzeug nach einem der vorhergehenden Ansprüche,

a) das an seiner Stirnseite (1b) Stirnflächen (23a, 63a) ausbildet, wobei die Querschneide (11, 51, 11', 51', 11", 51") in dem die Stirnflächen (23a, 63a) trennenden Bereich eine oder die Restquerschneide (11a, 51a, 11a', 51a', 11a", 51a") ausbildet und

b) bei dem zwischen Querschneiden-Innenbereich (11b, 51b, 11b', 51b', 11b", 51b") und Restquerschneide (11a, 51a, 11a', 51a', 11a", 51a") ein Winkel ($\alpha_1$, $\alpha_1$', $\beta_1$', $\beta_1$") ausgebildet ist, vorzugsweise ein stumpfer Winkel, besonders bevorzugt aus einem Bereich von 110° bis 140° oder von 120° bis 150°, insbesondere von 125° bis 135°.

11. Bohrwerkzeug nach einem der vorhergehenden Ansprüche, bei dem zwischen Restquerschneide (11a, 51a, 11a', 51a', 11a", 51a") und Verbindungslinie (2) ein Winkel ($\alpha_3$, $\alpha_3$', $\beta_3$', $\beta_3$") ausgebildet ist, vorzugsweise ein spitzer Winkel, besonders bevorzugt aus einem Bereich von 40° und 60°, insbesondere etwa 55°.

12. Bohrwerkzeug nach einem der vorhergehenden Ansprüche,

a) bei dem die Querschneide (11, 51, 11', 51', 11", 51") im Bereich der Werkzeugachse (A) einen Zentrierbereich (3) ausbildet und dieser Zentrierbereich (3) in einer durch die Restquerschneide (11a, 51a) ausgebildeten Schnittebene durch den Ausspitzungsbereich (21, 61) begrenzt ist oder in einer durch die Verbindungslinie (2) ausgebildeten Schnittebene in Stirnflächen (23a, 63a) übergeht,

b) wobei die Stirnflächen (23a, 23b, 63a, 63b) vorzugsweise von wenigstens einer Stirnflächenkante (24, 25, 64, 65) oder einer Hauptschneide (10, 50) begrenzt werden und vorzugsweise mit einem Kegelmantelanschliff oder einem Flächenanschliff versehen sind.

13. Bohrwerkzeug nach einem der vorhergehenden Ansprüche, wobei die Länge des Querschneiden-Innenbereiches (11b, 51b, 11b', 51b', 11b", 51b") zwischen 1/100 und 1/10 des Bohrwerkzeugdurchmessers (B) beträgt.

14. Bohrwerkzeug nach einem der vorhergehenden Ansprüche,

a) wobei wenigstens eine Hauptschneide (10, 50) gerade oder entlang ihres Verlaufs in die gleiche Richtung gekrümmt ist oder konkav oder konvex ausgebil-det ist,

b) wobei die Hauptschneiden (10, 50) an Tragbereichen (26, 66) angeordnet sind, die sich radial vom Zentralbereich (4) nach außen erstrecken und in axialer Richtung, vorzugsweise wendelförmig, verlaufen, auf ihren Seitenflächen die Spanflächen (19, 59) und auf ihren Außenflächen einen Rücken (20, 60) ausbilden.

**15.** Bohrwerkzeug nach einem der vorhergehenden Ansprüche,

a) wobei das Bohrwerkzeug Fasen (18, 58) aufweist, die den maximalen Durchmesser (B) des Bohrwerkzeugs bestimmen,
b) wobei das Bohrwerkzeug zwischen den Fasen (18, 58) einen geringeren Durchmesser aufweist, insbesondere im Bereich des Rückens (20, 60) der Tragbereiche,
c) wobei das Bohrwerkzeug wenigstens zwei Spannuten (15, 55) aufweist, die an der Stirnseite (1a) münden, wobei die Hauptschneiden (10, 50) an einem stirnseitigen Ende der Spannuten (15, 55) angeordnet sind, wobei bevorzugt zwischen den Spannuten (15, 55) Kühlmittelkanäle (16, 56) angeordnet sind.

**16.** Bohrwerkzeug nach einem der vorhergehenden Ansprüche,

a) wobei der Ausspitzungsbereich (21, 61) sich über die Spanfläche (19, 59) erstreckt oder über eine Tiefe von maximal 50% des Durchmessers (B) des Bohrers.

**Claims**

**1.** Drilling tool (1)

a) which is rotatable about a central tool axis (A),
b) which has at least two main cutting edges (10, 50) which are arranged on a face side (1b) and which merge in the inward direction toward the tool axis (A) into at least one chisel edge (11, 51, 11', 51', 11", 51"),
c) with the chisel edges (11, 51, 11', 51', 11", 51") running on the face side (1a) in or over a central region (4) surrounding the tool axis (A),
d) with the chisel edges (11, 51, 11', 51', 11", 51") forming, in the innermost region running through or in the region of the tool axis (A), and/or at the inside adjoining a point thinning region (21, 61), a residual chisel edge (11a, 51a, 11a', 51a', 11a", 51a"),
e) with cutting edge corners (17, 57) being formed at the outer ends of the main cutting edges (10, 50),
f) with a straight connecting line (2) being defined which runs through two cutting edge corners (17, 57) of main cutting edges (10, 50) situated opposite one another in relation to the tool axis (A), or if an opposite main cutting edge is not present, through a cutting edge corner (17, 57) and the tool axis (A),
g) with a chisel edge inner region running from the outer end of the residual chisel edge (11a',

51a'; 11a", 51a") within a region (D', D") with an angle of between -15° and +15° in relation to a parallel (m) to the connecting line (2), and having a length of 1/100 to 1/10 of the drill diameter B, preferably as far as the base side (F', F") of the region (D', D"),
**characterized in that**
h) the chisel edge (11, 51, 11', 51'; 11", 51"), in particular in at least one point thinning region (21, 61), forms an inner region of curvature (13, 53, 13', 53', 13", 53") and an outer region of curvature (12, 52, 12', 52', 12", 52") as viewed outward from the inside or from the central axis,
i) with the inner region of curvature (13, 53, 13', 53', 13", 53") being curved oppositely to the outer region of curvature (12, 52, 12', 52', 12", 52",
j) with the chisel edge (11, 51, 11', 51', 11", 51") having, in its at least one point thinning region (21, 61), a straight or linear chisel edge outer region (11c, 51c, 11c', 51c', 11c", 51c"), and adjoining the latter in the inward direction, a straight or linear chisel edge inner region (11b, 51 b, 11b', 51b'; 11b", 51b"), with the inner region of curvature (13, 53, 13', 53', 13", 53") being situated between the chisel edge inner region (11b, 51b, 11b', 51b'; 11b", 51b") and chisel edge outer region (11c, 51c, 11c', 51c', 11c", 51c").

**2.** Drilling tool according to Claim 1,

a) with the region (D', D") having a height parallel to the tool axis (A) corresponding to half the height of the triangle, with preferably the start (S', S") of the chisel edge inner region (11b', 11b") being arranged in the center of the height of the region (D', D"), and
b) with the region (D', D") particularly preferably being in the form of a pyramid with the start (S', S") of the chisel edge inner region (11b', 11b") as a tip.

**3.** Drilling tool according to one of the preceding claims,

a) with the chisel edge (11', 51'; 11", 51") entering the region (D', D") at its tip (S', S") and departing from the region (D', D") at its base side (F', F"), and
b) with the base side (F', F") running straight and at an angle of 90° to the connecting line (2).

**4.** Drilling tool according to one of the preceding claims, with the chisel edge (11', 51'; 11", 51") departing from the region (D',D") at an angle $(\beta_4', \beta_4")$ of at least 25° with respect to the connecting line (2) and/or at an angle of a maximum of 65° with respect to the base side (F).

**5.** Drilling tool according to Claim 4,

a) with the outer region of curvature (12, 52, 12', 52', 12", 52") having a left-hand curvature in the inward direction or in the direction of the tool axis (A) and with the inner region of curvature (13, 53, 13', 53', 13", 53") having a right-hand curvature in the inward direction or in the direction of the tool axis (A), or with the outer region of curvature (12, 52, 12', 52', 12", 52") having a convex curvature and the inner region of curvature (13, 53, 13', 53', 13", 53") having a concave curvature or with a point of inflection being formed between the outer region of curvature (12, 52, 12', 52', 12", 52") and inner region of curvature (13, 53, 13', 53', 13", 53"),

b) with the outer region of curvature (12, 52, 12', 52', 12", 52") being situated in the transition region and directly adjacent to the main cutting edge (10, 50), and/or with the transition of the chisel edge (11, 51, 11', 51', 11", 51") into the main cutting edges (10, 50) taking place at the outer edge of the central region (4).

6. Drilling tool according to one of the preceding claims,

a) in which the radius of curvature of the outer region of curvature (12, 52, 12', 52', 12", 52") is constant or variable or is selected from a range between 0.08 mm and 3 mm, and
b) in which the radius of curvature of the inner region of curvature (13, 53, 13', 53', 13", 53") is constant or variable or is selected from a range between 0.1 mm and 1 mm.

7. Drilling tool according to one of the preceding claims, in which the chisel edge inner region (11b, 51b, 11b', 51b'; 11b", 51b") and chisel edge outer region (11c, 51c, 11c', 51c', 11c", 51c") enclose an angle ($180°-\alpha_2$, $180°-\alpha_2'$, $180°-\beta_2'$, $180°-\beta_2"$) which is preferably an obtuse angle and/or lies between 130° and 160°, in particular 145° and 150°.

8. Drilling tool according to one of the preceding claims, in which

a) cutting edge corners (17, 57) are formed at the outer ends of the main cutting edges (10, 50), and
b) a straight connecting line (2) is defined which runs through two cutting edge corners (17, 57) of main cutting edges (10, 50) situated opposite one another in relation to the tool axis (A), or if an opposite main cutting edge is not present, through a cutting edge corner (17, 57) and the tool axis (A).

9. Drilling tool according to one of the preceding claims,

a) in which the chisel edge inner region (11b, 51b, 11b', 51b', 11b", 51b") runs at an angle ($\beta_5'$, $\beta_5"$) with respect to the connecting line (2), which angle ($\beta_5"$ $\beta_5"$) is selected to be in a range from -15° to 15°, preferably from 0° to 10°, with the chisel edge inner region (11b, 51b, 11b', 51b'; 11b", 51b") preferably running at least predominantly parallel to the connecting line (2), and
b) in which the chisel edge outer region (11c, 51c, 11c', 51c', 11c", 51c") runs at an angle ($\alpha_4$, $\alpha_4'$, $\beta_4'$, $\beta_4"$) with respect to the connecting line (2), which angle ($\alpha_4$, $\alpha_4'$, $\beta_4'$, $\beta_4"$) is selected to be in a range from 20° to 50°, in particular from 30° to 35°.

10. Drilling tool according to one of the preceding claims,

a) which on its face side (1b) forms end surfaces (23a, 63a), with the chisel edge (11, 51, 11', 51', 11", 51") forming a or the residual chisel edge (11a, 51a, 11a', 51a', 11a", 51a") in the region dividing the end surfaces (23a, 63a), and
b) in which an angle ($\alpha_1$, $\alpha_1'$, $\beta_1'$, $\beta_1"$) is formed between the chisel edge inner region (11b, 51b, 11b', 51 b'; 11b", 51b") and residual chisel edge (11a, 51a, 11a', 51a', 11a", 51 a"), which angle ($\alpha_1$, $\alpha_1'$, $\beta_1'$, $\beta_1"$) is preferably an obtuse angle and is particularly preferably in a range from 110° to 140° or from 120° to 150°, in particular from 125° to 135°.

11. Drilling tool according to one of the preceding claims, in which an angle ($\alpha_3$, $\alpha_3'$, $\beta'$, $\beta_3"$) is formed between the residual chisel edge (11a, 51a, 11a', 51 a', 11a", 51 a") and connecting line (2), which angle ($\alpha_3$, $\alpha_3'$, $\beta_3'$, $\beta_3"$) is preferably an acute angle and is particularly preferably in a range from 40° to 60°, and is in particular approximately 55°.

12. Drilling tool according to one of the preceding claims,

a) in which the chisel edge (11, 51, 11', 51', 11", 51") forms a centering region (3) in the region of the tool axis (A), and said centering region (3), in a section plane formed by the residual chisel edge (11a, 51a), is delimited by the point thinning region (21, 61) or merges, in a section plane formed by the connecting line (2), into end surfaces (23a, 63a),
b) with the end surfaces (23a, 23b, 63a, 63b) preferably being delimited by at least one end surface edge (24, 25, 64, 65) or a main cutting edge (10, 50) and preferably being provided with a conical point grinding or a surface grinding.

13. Drilling tool according to one of the preceding claims, with the length of the chisel edge inner region (11b, 51b, 11b', 51b', 11b", 51b") amounting to between 1/100 and 1/10 of the drilling tool diameter (B).

**14.** Drilling tool according to one of the preceding claims,

a) with at least one main cutting edge (10, 50) being of straight design or being designed to be curved along its profile in the same direction or of concave or convex design,
b) with the main cutting edges (10, 50) being arranged on load-bearing regions (26, 66) which extend radially outward from the central region (4) and run preferably helically in the axial direction and which on their side surfaces form the chip surfaces (19, 59) and on their outer surfaces form a land (20, 60).

**15.** Drilling tool according to one of the preceding claims,

a) with the drilling tool having bevels (18, 58) which determine the maximum diameter (B) of the drilling tool,
b) with the drilling tool having a relatively small diameter between the bevels (18, 58), in particular in the region of the land (20, 60) of the load-bearing regions,
c) with the drilling tool having at least two chip grooves (15, 55) which open out on the face side (1a), with the main cutting edges (10, 50) being arranged at a face-side end of the chip grooves (15, 55), with coolant ducts (16, 56) preferably being arranged between the chip grooves (15, 55).

**16.** Drilling tool according to one of the preceding claims,

a) with the point thinning region (21, 61) extending over the chip surface (19, 59) or over a depth of a maximum of 50% of the diameter (B) of the drill.

## Revendications

**1.** Outil de perçage (1)

a) qui peut tourner autour d'un axe d'outil (A) central,
b) qui présente au moins deux tranchants principaux (10, 50) qui sont disposés sur un côté frontal (1b) et qui, dans la direction vers l'intérieur par rapport à l'axe d'outil (A), se transforment en au moins un tranchant transversal (11, 51, 11', 51', 11", 51"),
c) le tranchant transversal (11, 51, 11', 51', 11", 51") s'étendant dans ou sur une zone centrale (4), entourant l'axe d'outil (A), sur le côté frontal (1a),
d) le tranchant transversal (11, 51, 11', 51', 11", 51") constituant, dans la zone la plus intérieure s'étendant à travers ou dans la zone de l'axe d'outil (A) et/ou en se raccordant intérieurement à une zone en pointe (21, 61), un tranchant résiduel (11a, 51a, 11a', 51a', 11a", 51a"),
e) des pointes de coupe (17, 57) étant constituées sur les extrémités extérieures des tranchants principaux (10, 50),
f) une ligne de raccordement (2) rectiligne étant définie, qui s'étend à travers deux pointes de coupe (17, 57) de tranchants principaux (10, 50) opposés l'un à l'autre par rapport à l'axe d'outil (A) ou, en cas d'absence d'un tranchant principal opposé, à travers une pointe de coupe (17, 57) et l'axe d'outil (A),
g) une zone intérieure de tranchant transversal s'étendant à partir de l'extrémité extérieure du tranchant résiduel (11a', 51a', 11a", 51a") à l'intérieur d'une zone (D', D") avec un angle entre -15° et +15° par rapport à une parallèle (m) à la ligne de raccordement (2), et présente une longueur de 1/100ème à 1/10ème du diamètre de foret B, de préférence jusqu'au côté pied (F', F") de la zone (D', D"),
**caractérisé en ce que**
h) le tranchant transversal (11, 51, 11', 51', 11", 51"), en particulier dans au moins une zone en pointe (21, 61), constitue, vu depuis l'intérieur ou depuis l'axe central vers l'extérieur par rapport à un tranchant principal, une zone de courbure intérieure (13, 53, 13', 53', 13", 53") et une zone de courbure extérieure (12, 52, 12', 52', 12", 52"),
i) la zone de courbure intérieure (13, 53, 13',53', 13", 53") étant courbée en sens opposé à la zone de courbure extérieure (12, 52, 12',52', 12", 52"),
j) le tranchant transversal (11, 51, 11', 51', 11", 51") présentant, dans sa zone en pointe (21, 61) au moins au nombre de un, une zone extérieure de tranchant transversal (11c, 51c, 11c', 51c', 11c", 51 c") rectiligne ou linéaire et, d'une façon qui la jouxte vers l'intérieur, une zone intérieure de tranchant transversal (11b, 51 b, 11b', 51 b', 11b", 51 b") rectiligne ou linéaire, la zone de courbure intérieure (13, 53, 13',53', 13", 53") étant disposée entre la zone intérieure de tranchant transversal (11b, 51b, 11b', 51b', 11b", 51b") et la zone extérieure de tranchant transversal (11c, 51 c, 11c', 51 c', 11c", 51 c").

**2.** Outil de perçage selon la revendication 1,

a) la zone (D', D") présentant une hauteur parallèlement à l'axe d'outil (A) qui correspond à la demi hauteur du triangle, le début (S', S") de la zone intérieure de tranchant transversal (11b', 11b") étant de préférence disposé au milieu de la hauteur de la zone (D', D"), et
b) la zone (D', D") étant de façon particulièrement préférée constituée en tant que pyramide, avec le début (S', S") de la zone intérieure de tranchant transversal (11b', 11b") en tant que pointe.

3. Outil de perçage selon l'une des revendications précédentes,

   a) le tranchant transversal (11', 51', 11", 51") entrant dans la zone (D', D") au niveau de la pointe (S', S") de celle-ci et quittant la zone (D', D") au niveau du côté pied (F', F") de celle-ci, et
   b) le côté pied (F', F") étant rectiligne et formant un angle de 90° par rapport à la ligne de raccordement (2).

4. Outil de perçage selon l'une des revendications précédentes,
   le tranchant transversal (11', 51', 11", 51") quittant la zone (D', D") en formant un angle ($\beta_4$', $\beta_4$") d'au moins 25° par rapport à la ligne de raccordement (2) et/ou en formant un angle de 65° maximum par rapport au côté pied (F).

5. Outil de perçage selon la revendication 4,

   a) la zone de courbure extérieure (12, 52, 12', 52', 12", 52") présentant, vers l'intérieur ou en direction de l'axe d'outil (A), une courbure à gauche, et la zone de courbure intérieure (13, 53, 13',53', 13", 53") présentant, vers l'intérieur ou en direction de l'axe d'outil (A), une courbure à droite, ou bien la zone de courbure extérieure (12, 52, 12',52', 12", 52") présentant une courbure convexe, et la zone de courbure intérieure (13, 53, 13',53', 13", 53") présentant une courbure concave, ou bien un point d'inflexion étant constitué entre la zone de courbure extérieure (12, 52, 12',52', 12", 52") et la zone de courbure intérieure (13, 53, 13',53', 13", 53"),
   b) la zone de courbure extérieure (12, 52, 12', 52', 12", 52") se trouvant dans la zone de transition ou au voisinage immédiat du tranchant principal (10, 50), et la transition du tranchant transversal (11, 51, 11', 51', 11", 51") vers les tranchants principaux (10, 50) s'effectuant sur le bord extérieur de la zone centrale (4).

6. Outil de perçage selon l'une des revendications précédentes,

   a) dans lequel le rayon de courbure de la zone de courbure extérieure (12, 52, 12',52', 12", 52") est constant ou variable ou est choisi dans une plage de 0,08 mm à 3 mm, et
   b) dans lequel le rayon de courbure de la zone de courbure intérieure (13, 53, 13',53', 13", 53") est constant ou variable ou est choisi dans une plage de 0,1 mm à 1 mm.

7. Outil de perçage selon l'une des revendications précédentes, dans lequel la zone intérieure de tranchant transversal (11b, 51b, 11b', 51b', 11b", 51b") et la zone extérieure de tranchant transversal (11c, 51c, 11c', 51c', 11c", 51c") forment un angle (180° -$\alpha_2$, 180° - $\alpha_2$',180° - $\beta_2$',180° - $\beta_2$") qui est de préférence un angle obtus et/ou qui est compris entre 130° et 160°, en particulier entre 145° et 150°.

8. Outil de perçage selon l'une des revendications précédentes, dans lequel

   a) des pointes de coupe (17, 57) sont constituées sur les extrémités extérieures des tranchants principaux (10, 50) et
   b) une ligne de raccordement (2) rectiligne est définie qui s'étend à travers deux pointes de coupe (17, 57) de tranchants principaux (10, 50) opposés l'un à l'autre par rapport à l'axe d'outil (A) ou, en cas d'absence d'un tranchant principal opposé, à travers une pointe de coupe (17, 57) et l'axe d'outil (A).

9. Outil de perçage selon l'une des revendications précédentes,

   a) dans lequel la zone intérieure de tranchant transversal (11b, 51b, 11b', 51b', 11b", 51b") s'étend en formant par rapport à la ligne de raccordement (2) un angle ($\beta_5$', $\beta_5$") qui est choisi dans une plage de -15° à 15°, de préférence de 0° à 10°, la zone intérieure de tranchant transversal (11b, 51b, 11b', 51b', 11b", 51b") s'étendant de préférence au moins de façon prépondérante parallèlement à la ligne de raccordement (2), et
   b) dans lequel la zone extérieure de tranchant transversal (11c, 51c, 11c', 51c', 11c", 51c") s'étend en formant par rapport à la ligne de raccordement (2) un angle ($\alpha_4$, $\alpha_4$', $\beta_4$' $\beta_4$") qui est choisi dans une plage de 20° à 50°, en particulier de 30° à 35°.

10. Outil de perçage selon l'une des revendications précédentes,

   a) qui constitue sur son côté frontal (1b) des faces frontales (23a, 63a), le tranchant transversal (11, 51, 11', 51', 11", 51") constituant dans la zone séparant les faces frontales (23a, 63a) un ou le tranchant résiduel (11a, 51a, 11a', 51a', 11a", 51a"), et
   b) dans lequel, entre la zone intérieure de tranchant transversal (11b, 51b, 11b', 51b', 11b", 51b") et le tranchant résiduel (11a, 51a, 11a', 51a', 11a", 51a"), il est constitué un angle ($\alpha_1$, $\alpha_1$', $\beta_1$', $\beta_1$"), de préférence un angle obtus, de façon particulièrement préférée dans une plage de 110° à 140°, en particulier de 120° à 150°, en particulier de 125° à 135°.

11. Outil de perçage selon l'une des revendications précédentes, dans lequel, entre le tranchant résiduel (11a, 51a, 11a', 51a', 11a", 51a") et la ligne de raccordement (2), il est constitué un angle ($\alpha_3$, $\alpha_3'$, $\beta_3'$, $\beta_3"$), de préférence un angle aigu, de façon particulièrement préférée dans une plage de 40° à 60°, en particulier d'environ 55°C.

12. Outil de perçage selon l'une des revendications précédentes,

    a) dans lequel le tranchant transversal (11, 51, 11', 51', 11", 51") constitue, dans la zone de l'axe d'outil (A), une zone de centrage (3), et cette zone de centrage (3) est, dans un plan de coupe constitué par le tranchant résiduel (11a, 51a), limitée par la zone en pointe (21, 61) ou bien se transforme en faces frontales (23a, 63a) dans un plan de coupe constitué par la ligne de raccordement (2),
    b) les faces frontales (23a, 23b, 63a, 63b) sont limitées de préférence par au moins une arête de face frontale (24, 25, 64, 65) ou par un tranchant principal (10, 50), et sont de préférence munies d'un affûtage conique ou d'un affûtage plan.

13. Outil de perçage selon l'une des revendications précédentes, la longueur de la zone intérieure de tranchant transversal (11b, 51b, 11b', 51b', 11b", 51b") étant comprise entre 1/100ème et 1/10ème du diamètre d'outil de perçage (B).

14. Outil de perçage selon l'une des revendications précédentes,

    a) au moins un tranchant principal (10, 50) étant rectiligne ou étant courbé dans la même direction le long de son étendue, ou est constitué de façon concave ou convexe.
    b) les tranchants principaux (10, 50) étant disposés sur des zones de support (26, 66) qui s'étendent radialement à partir de la zone centrale (4) vers l'extérieur et s'étendent dans la direction axiale, de préférence en forme d'hélice, constituant sur leurs faces latérales les faces d'attaque (19, 59) et, sur leurs faces extérieures, un dos (20, 60).

15. Outil de perçage selon l'une des revendications précédentes,

    a) l'outil de perçage présentant des chanfreins (18, 58) qui définissent le diamètre (B) maximal de l'outil de perçage,
    b) l'outil de perçage présentant, entre les chanfreins (18, 58), un diamètre plus faible, en particulier dans la zone du dos (20, 60) des zones de support,
    c) l'outil de perçage présentant au moins deux rainures à copeaux (15, 55) qui débouchent au niveau du côté frontal (1a), les tranchants principaux (10, 50) étant disposés au niveau d'une extrémité côté frontal des rainures à copeaux (15, 55), des canalisations d'agent de refroidissement (16, 56) étant disposées de préférence entre les rainures à copeaux (15, 55).

16. Outil de perçage selon une des revendications précédentes,

    a) la zone en pointe (21, 61) s'étendant sur la face d'attaque (19, 59) ou bien sur une profondeur de maximum 50 % du diamètre (B) de l'outil de perçage.

## FIG 1a

## FIG 1b

# FIG 2

66, 63b 60 65
56 58
63a 64 21
18 2 19b
57 11
50 A 22
62 15
4 19
10
55, 59 17
51 23a
61 18
58 24
25 16
23b, 26 20

# FIG 4

3 1a

**FIG 3a**

**FIG 3b**

FIG 5a

FIG 5b

EP 2 237 913 B1

FIG 6a

FIG 6b

EP 2 237 913 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 83531
- DE 84413
- DE 19983068 T1
- DE 102006018322
- EP 0320881 A
- WO 9950014 A